# EUROPEAN PATENT APPLICATION

(11) **EP 2 937 764 A1**
(43) Date of publication of application: **28.10.2015**
(21) Application number: 14834905.3
(22) Date of filing: 07.01.2014
(51) Int. Cl.: G06F 3/023

(54) **T CODE INPUT METHOD**

(30) Priority: 07.08.2013 CN 201310340078
(71) Applicant: Tao, Jinhua, Shanghai 200136 (CN)
(72) Inventor: Tao, Jinhua, Shanghai 200136 (CN)
(74) Representative: Winter, Brandl, Fürniss, Hübner, Röss, Kaiser, Polte - Partnerschaft mbB
(86) International application number: PCT/CN2014/000017
(87) International publication number: WO 2015/018172

(57) **Abstract**

An input method, in particular, a T-code input method, comprises three symbols used in two coding modes, namely, "·", "-", and "|" for Mode I and "○", "-", and "|" for Mode II. 39 different codes can be obtained by combining the symbols in no more than three, which can represent 26 English letters, 10 Arabic numerals, question mark, period and space in three categories under the two modes, one started with "·", "-", "|" respectively and the other "○", "-", "|". The T-code method can be used in PCs by arbitrarily assigning the symbols to three keys on the keyboard, or be used in micro input terminals that support the operation of three symbols.

## Description

### FIELD

The present invention relates to a T-code input method, which pertains to the technical field of input of letters, numerals and symbolic codes.

### BACKGROUND

Currently, any input methods, both at home and abroad, are supported by a plurality of keys and various terminal devices have to sustain a considerable size to accommodate the many keys, resulting in higher manufacturing cost, reduction in mobility, and complex texting. A gap in input methods has made it difficult to equip various micro terminals with appropriate input terminals.

### SUMMARY

Existing input systems require a large number of keys, making them not applicable to micro input terminals of micro devices. To solve this problem, the present invention provides a T-code input method featuring very few keys, simple operation and easy memorization.

A T-code input method characterized by three symbols, namely, "·", "-", and "|", which can be combined in no more than three to form no more than 39 different codes, used to represent 26 English letters, 10 Arabic numerals, question mark, period and space in three categories started with "·", "-" and "|" respectively under one of two modes. The T-code method can be used in PCs by arbitrarily assigning the symbols to three keys on the keyboard, or be used in micro input terminals that support the operation of the three symbols of "·", "-" and "|".

A T-code input method, which can be used to enter two commands in addition to the 39 combinations, namely, "||||" representing "Enter", and "- - - -" representing "Backspace".

A T-code input method, which makes use of the correlation between three categories of codes started with "·", "-", and "|" respectively and the characters under two different input modes as follows:
(1) Mode I: the T codes corresponding to uppercase English letters, Arabic numerals, question mark, period, Space, Enter and Backspace: 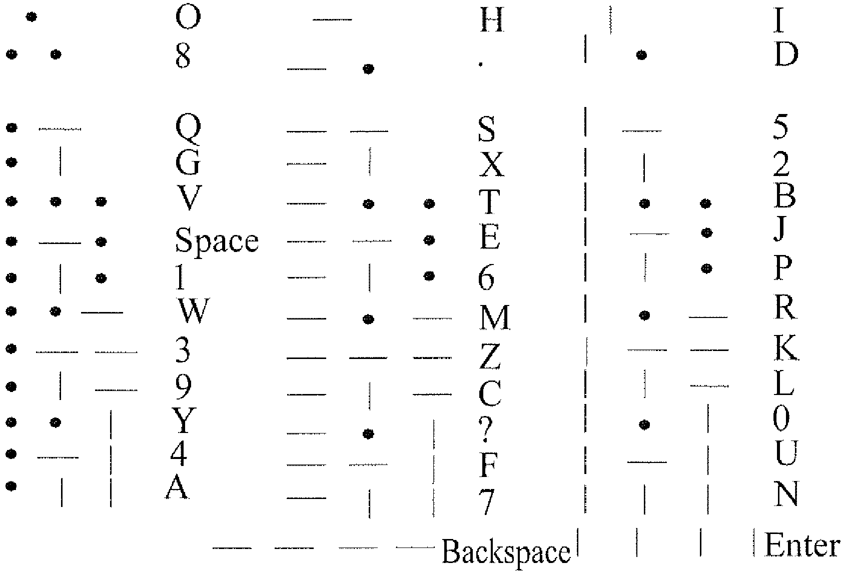
(2) Mode II: the T codes corresponding to lowercase English letters, Arabic numerals, question mark, period, Space, Enter and Backspace:

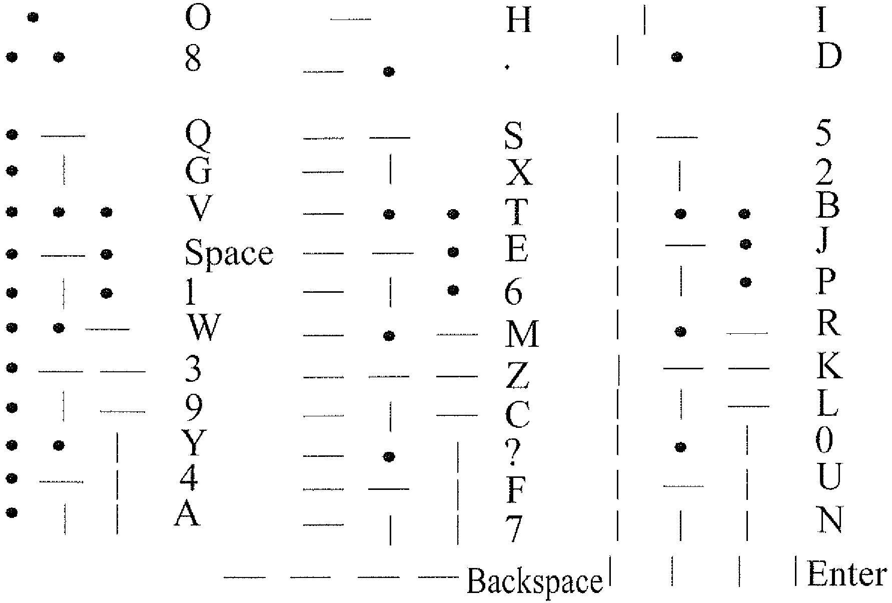

A T-code input method that operates under the two modes as follows:
Mode I, in which uppercase English letters, Arabic numerals, question mark, period, Space, Enter and Backspace can be entered; and
Mode II, in which lowercase English letters, Arabic numerals, question mark, period, Space, Enter and Backspace can be entered.

Under either mode, a code may start with "-", "-" or "|", thus representing one of the 13 characters.

Switching between the two input modes:
(1) For common keyboards: simultaneously press the three keys that are mapped to the three symbols;
(2) For micro input terminals: for key-type micro input terminals, simultaneously press two keys; and for ball-type micro input terminals, long press the ball for at least 1 s.
(3) Soft switching is also possible.

A T-code input method characterized as follows: after inputting the first symbol, the system will provide a list of all the codes headed by the symbol and corresponding characters within 0.01 s; after inputting another symbol, method list will show with all related combinations and corresponding characters within 0.01 s; and a definite character will be given after inputting a third symbol.

A T-code input method characterized by three symbols, namely, "○", "-", and "|", which can be combined in no more than three to form no more than 39 different codes, used to represent 26 English letters, 10 Arabic numerals, question mark, period and space in three categories started with "○", "-" and "|" respectively. The T-code method can be used in PCs by arbitrarily assigning the symbols to three keys on the keyboard, or be used in micro input terminals that support the operation of the three symbols of "o", "-" and "|".

A T-code input method, which can be used to enter two commands in addition to the 39 combinations, namely, "||||" representing "Enter", and "----" representing "Backspace".

A T-code input method, which makes use of the correlation between three categories of codes started with "○", "-", and "|" respectively and the characters under two different input modes as follows:
(1) Mode I: the T codes corresponding to uppercase English letters, Arabic numerals, question mark, period, Space, Enter and Backspace: 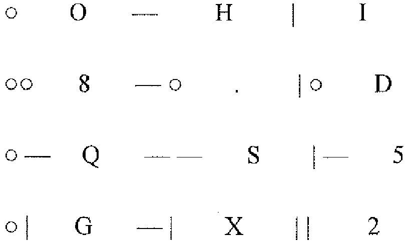 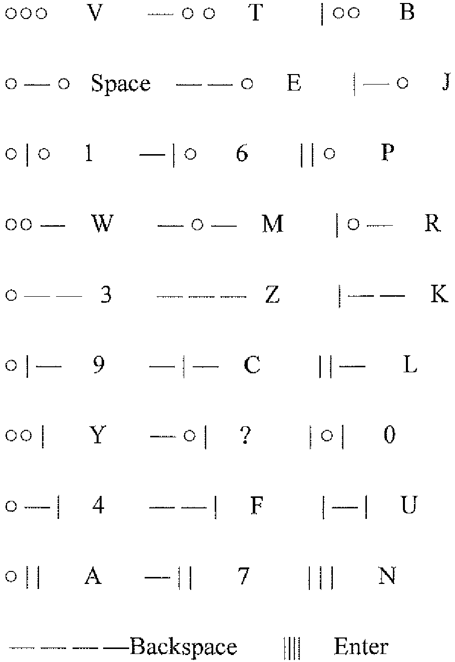
(2) Mode II: the T codes corresponding to lowercase English letters, Arabic numerals, question mark, period, Space, Enter and Backspace:

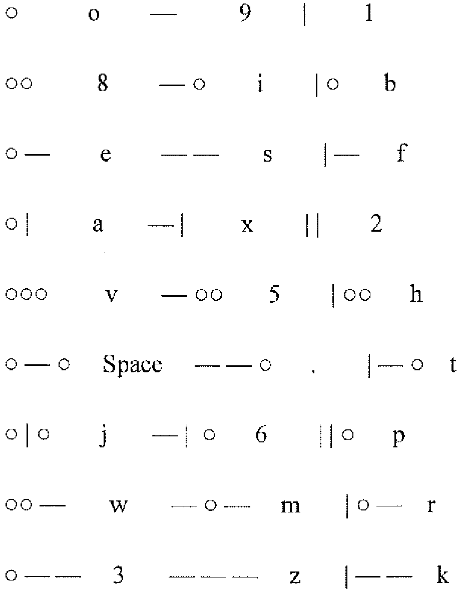

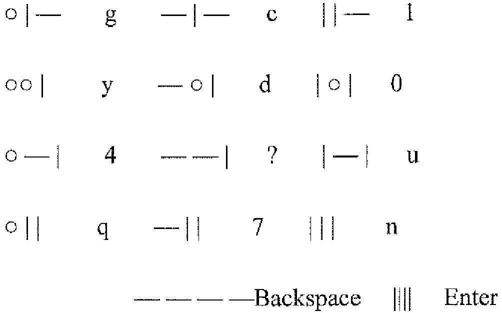

A T-code input method that operates under the two modes as follows:
Mode I, in which uppercase English letters, Arabic numerals, question mark, period, Space, Enter and Backspace can be entered; and
Mode II, in which lowercase English letters, Arabic numerals, question mark, period, Space, Enter and Backspace can be entered.

Under either mode, a code may start with "○", "-" or "|", thus representing one of the 13 characters.

Switching between the two input modes:
(1) For common keyboards: simultaneously press the three keys that are mapped to the three symbols;
(2) For micro input terminals: for key-type micro input terminals, simultaneously press two keys; and for ball-type micro input terminals, long press the ball for at least 1 s.
(3) Soft switching is also possible.

A T-code input method characterized as follows: after inputting the first symbol, the system will provide a list of all the codes headed by the symbol and corresponding characters within 0.01 s; after inputting another symbol, method list will show with all related combinations and corresponding characters within 0.01 s; and a definite character will be given after inputting a third symbol.

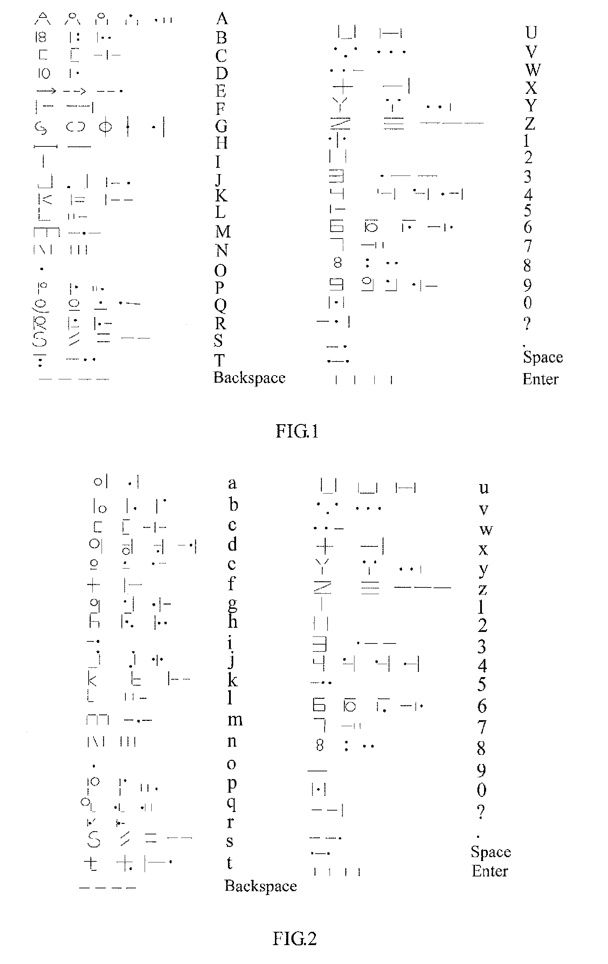

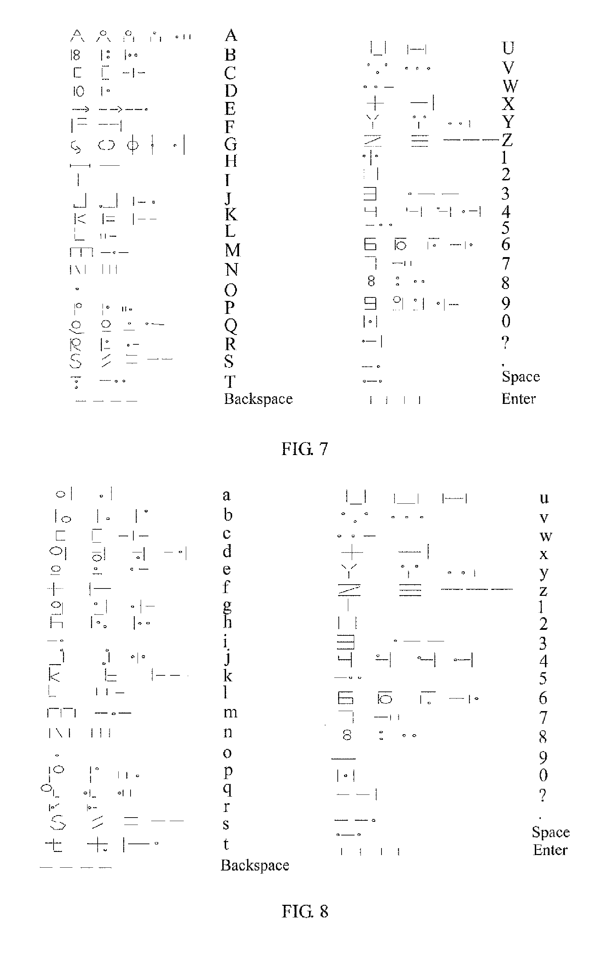

General design scheme:
English letters, arabic numerals, question mark, period and space could be represented with "point", "closed area", "short vertical line", "short horizontal line", "short oblique line",
"long vertical line", "along horizontal line" and "long oblique line" (refer to FIG1, FIG2, FIG7 and FIG8).

"point", "closed area", "short vertical line", "short horizontal line", "short oblique line",

"long vertical line", "long horizontal line" and "long oblique line" could be represented with "·", "-", "|" and "○", "-", "|" (refer to FIG1, FIG2, FIG7 and FIG8).

So English letters, arabic numerals, question mark, period and space could be represented with "·", "-", "|" and "○", "-", "|" (refer to FIG1, FIG2, FIG7 and FIG8)
"·" or "○" represents "point", "closed area":
(1) Point ".":e.g.: i j.
(2) Closed area:
   Circular: e.g.: O, 6, 9;
   Non-circular: e.g.: A, B, D, P;
"·" or "○" represents "short vertical line", "short horizontal line", "short oblique line":
(1) Short vertical line: e.g.: T, J;(2) Short horizontal line: e.g.: t, j;
(3) Short oblique line: e.g.: y, Y,
"-" represents "long horizontal line", "short horizontal line" or "oblique line":
(1) Long horizontal line: e.g.: f, F, H, T;
(2) Short horizontal line: e.g.: L;
(3) Oblique line: e.g.: Q, R,
"|" represents "long vertical line", "short vertical line" or "oblique line":
1. Long vertical line: e.g.: B, D, F, K;
2. Short vertical line, e.g.: P, L, 7, p;
3. Oblique line: e.g.: X, N.

The present invention takes three symbols as the most basic input units. Each symbol represents a part of a character pictographically, making it easy and convenient to remember. The system requires only a few keys, offering simple operation applicability to micro input terminals.

### BRIEF DESCRIPTION OF THE DRAWINGS

FIG. 1 shows the coding principle where T codes represent uppercase English letters, Arabic numerals, question mark, period, Space, Enter and Backspace with "·", "-", "|" as the symbols in "Mode I" of the present invention;
FIG. 2 shows the coding principle where T codes represent lowercase English letters, Arabic numerals, question mark, period, Space, Enter and Backspace with "·", "-", "|" as the symbols in "Mode I" of the present invention;

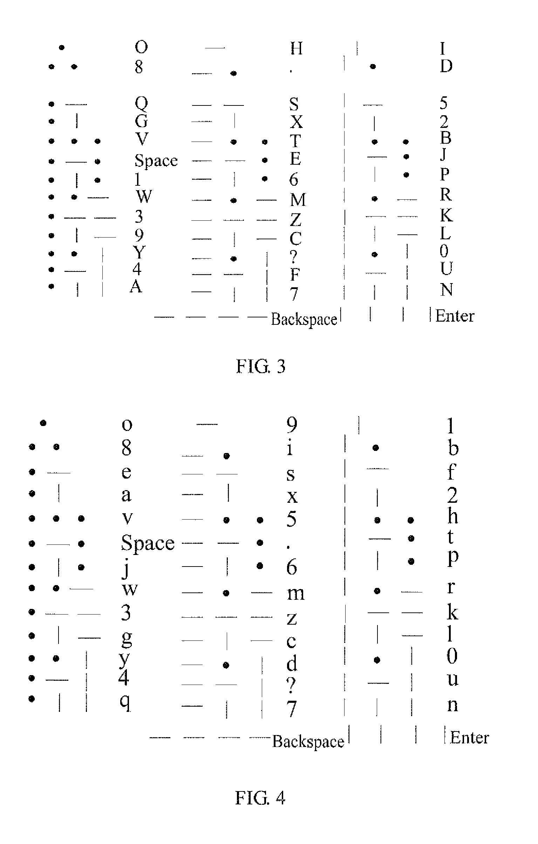

FIG. 3 shows the mapping from T codes to uppercase English letters, Arabic numerals, question mark, period, Space, Enter and Backspace with "·", "-", "|" as the symbols in "Mode I" of the present invention;
FIG. 4 shows the mapping from T codes to lowercase English letters, Arabic numerals, question mark, period, Space, Enter and Backspace with "·", "-", "|" as the symbols in "Mode I" of the present invention;

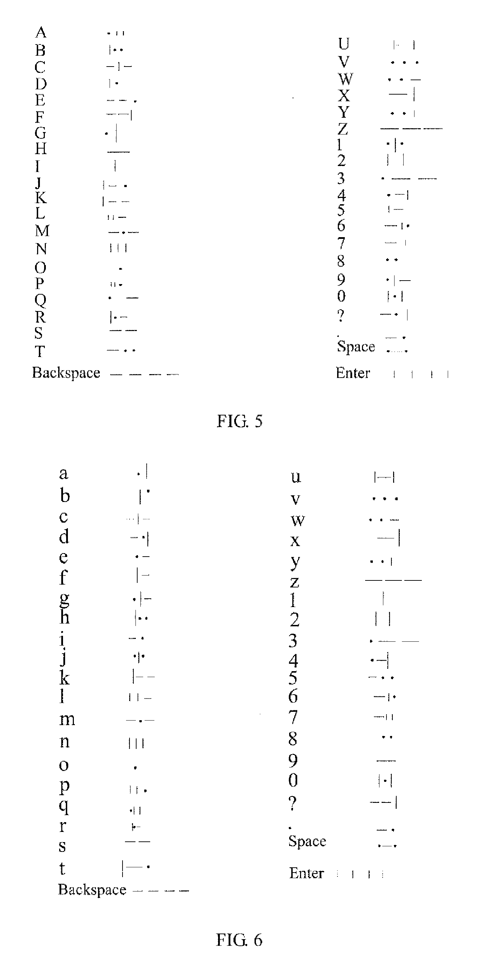

FIG. 5 shows the uppercase English letters, Arabic numerals, question mark, period, Space, Enter and Backspace T codes with "·", "-", "|" as the symbols in "Mode I" of the present invention;
FIG. 6 shows the lowercase English letters, Arabic numerals, question mark, period, Space, Enter and Backspace T codes with "·", "-", "|" as the symbols in "Mode I" of the present invention;
FIG. 7 shows the coding principle where T codes represent uppercase English letters, Arabic numerals, question mark, period, Space, Enter and Backspace with "○", "-", "|" as the symbols in "Mode II" of the present invention;
FIG. 8 shows the coding principle where T codes represent lowercase English letters, Arabic numerals, question mark, period, Space, Enter and Backspace with "○", "-", "|" as the symbols in "Mode II" of the present invention;

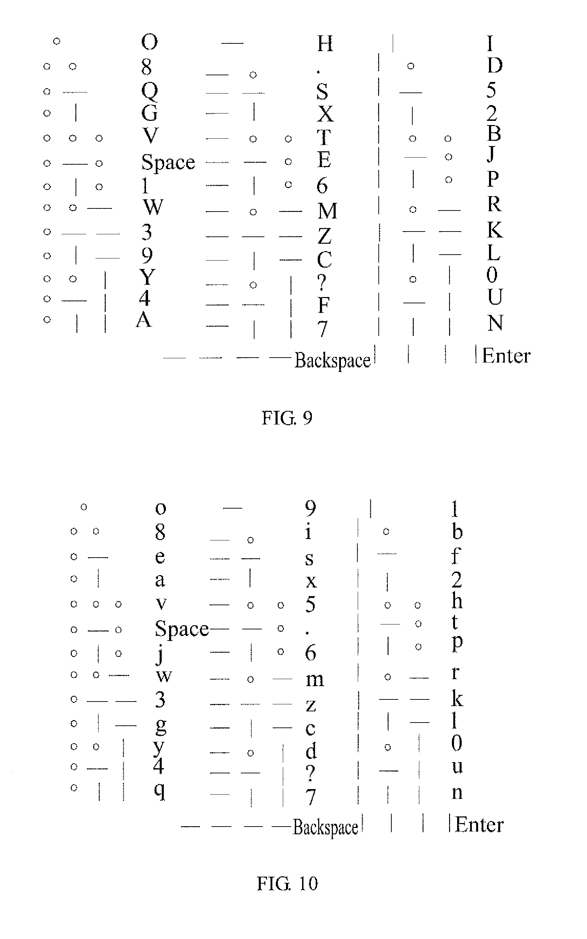

FIG. 9 shows the T codes uppercase English letters, Arabic numerals, question mark, period, Space, Enter and Backspace with "○", "-", "|" as the symbols in "Mode II" of the present invention;
FIG. 10 shows the T codes lowercase English letters, Arabic numerals, question mark, period, Space, Enter and Backspace with "○", "-", "|" as the symbols in "Mode II" of the present invention;

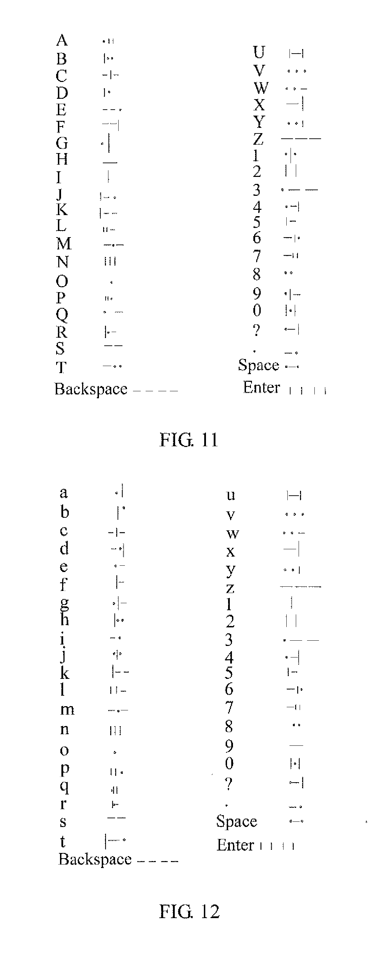

FIG. 11 shows the uppercase English letters, Arabic numerals, question mark, period, Space, Enter and Backspace T codes with "○", "-", "|" as the symbols in "Mode II" of the present invention; and
FIG. 12 shows the lowercase English letters, Arabic numerals, question mark, period, Space, Enter and Backspace T codes with "○", "-", "|" as the symbols in "Mode II" of the present invention.

### DETAILED DESCRIPTION

A T-code input method characterized by three symbols, namely, "·", "-", and "|", which can be combined in no more than three to form no more than 39 different codes, used to represent 26 English letters, 10 Arabic numerals, question mark, period and space in three categories started with "·", "-" and "|" respectively under one of two modes. The T-code method can be used in PCs by arbitrarily assigning the symbols to three keys on the keyboard, or be used in micro input terminals that support the operation of the three symbols of "·", "-" and "|".

A T-code input method, which can be used to enter two commands in addition to the 39 combinations, namely, "||||" representing "Enter", and "----" representing "Backspace".

A T-code input method, which makes use of the correlation between three categories of codes started with "·", "-", and "|" respectively and the characters under two different input modes as follows:
(1) Mode I: the T codes corresponding to uppercase English letters, Arabic numerals,question mark, period, Space, Enter and Backspace: 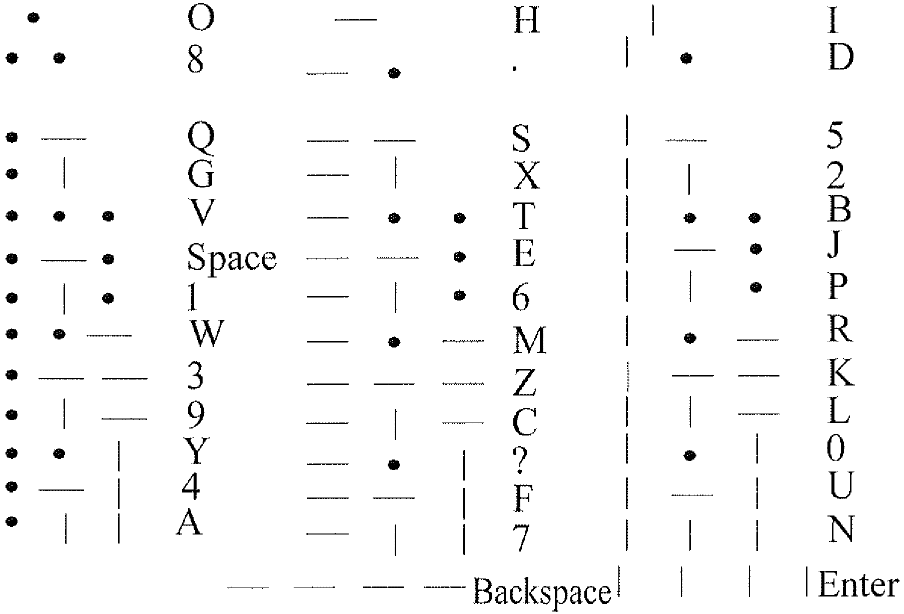
(2) Mode II: the T codes corresponding to lowercase English letters, Arabic numerals, question mark, period, Space, Enter and Backspace:

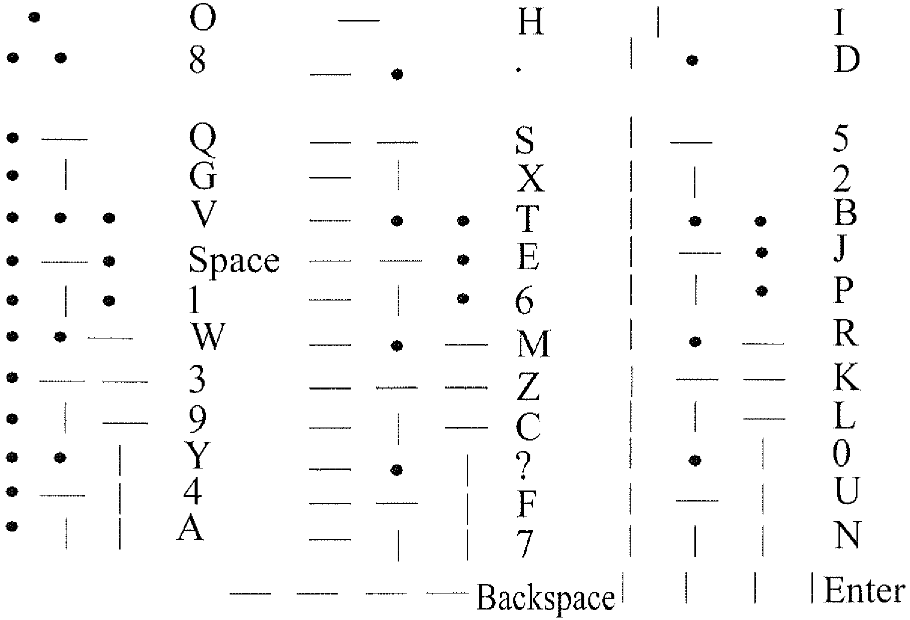

A T-code input method that operates under the two modes as follows:
Mode I, in which uppercase English letters, Arabic numerals, question mark, period, Space, Enter and Backspace can be entered; and
Mode II, in which lowercase English letters, Arabic numerals, question mark, period, Space, Enter and Backspace can be entered.

Under either mode, a code may start with "·", "-" or "|", thus representing one of the 13 characters.

Switching between the two input modes:
(1) For common keyboards: simultaneously press the three keys that are mapped to the three symbols;
(2) For micro input terminals: for key-type micro input terminals, simultaneously press two keys; and for ball-type micro input terminals, long press the ball for at least 1 s.
(3) Soft switching is also possible.

A T-code input method characterized as follows: after inputting the first symbol, the system will provide a list of all the codes headed by the symbol and corresponding characters within 0.01 s; after inputting another symbol, method list will show with all related combinations and corresponding characters within 0.01 s; and a definite character will be given after inputting a third symbol.

A T-code input method characterized by three symbols, namely, "○", "-", and "|", which can be combined in no more than three to form no more than 39 different codes, used to represent 26 English letters, 10 Arabic numerals, question mark, period and space in three categories started with "○", "-" and "|" respectively. The T-code method can be used in PCs by arbitrarily assigning the symbols to three keys on the keyboard, or be used in micro input terminals that support the operation of the three symbols of "o", "-" and "|".

A T-code input method, which can be used to enter two commands in addition to the 39 combinations, namely, "||||" representing "Enter", and "----" representing "Backspace".

A T-code input method, which makes use of the correlation between three categories of codes started with "○", "-", and "|" respectively and the characters under two different input modes as follows:
(1) Mode I: the T codes corresponding to uppercase English letters, Arabic numerals, question mark, period, Space, Enter and Backspace: 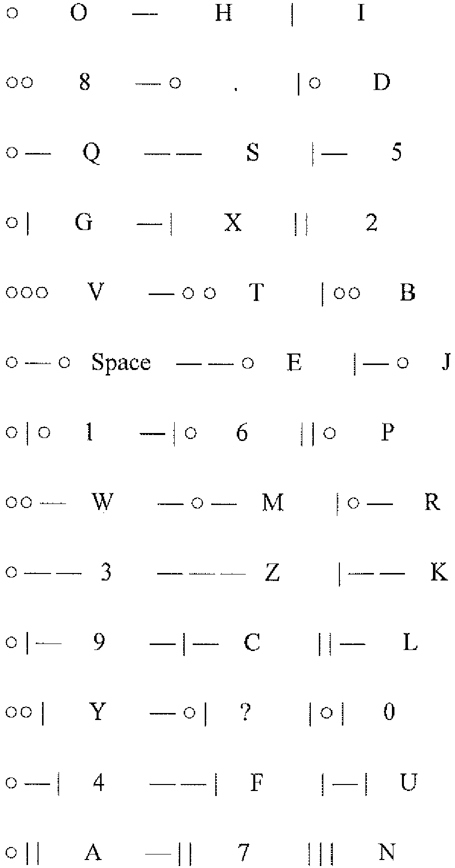 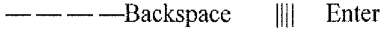
(2) Mode II: the T codes corresponding to lowercase English letters, Arabic numerals, question mark, period, Space, Enter and Backspace:

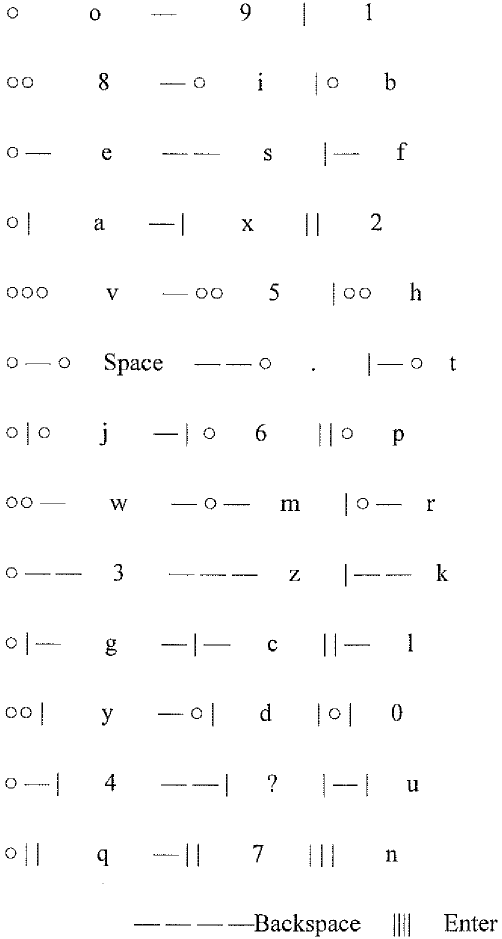

AT-code input method that operates under the two modes as follows:
Mode I, in which uppercase English letters, Arabic numerals, question mark, period, Space, Enter and Backspace can be entered; and
Mode II, in which lowercase English letters, Arabic numerals, question mark, period, Space, Enter and Backspace can be entered.

Under either mode, a code may start with "○", "-" or "|", thus representing one of the 13 characters.

Switching between the two input modes:
(1) For common keyboards: simultaneously press the three keys that are mapped to the three symbols;
(2) For micro input terminals: for key-type micro input terminals, simultaneously press two keys; and for ball-type micro input terminals, long press the ball for at least 1 s.
(3) Soft switching is also possible.

A T-code input method characterized as follows: after inputting the first symbol, the system will provide a list of all the codes headed by the symbol and corresponding characters within 0.01 s; after inputting another symbol, method list will show with all related combinations and corresponding characters within 0.01 s; and a definite character will be given after inputting a third symbol.

The present disclosure will be described in detail with embodiment as follows:

### Embodiment:

To be texted:
How are you?
I am fine.

Input "-", the code of "H". After 1 second, other 12 codes which started with "-" are ignored automatically, then letter "H"'s input finished. Same for letter "o"'s input: input "." and wait for 1 second, other 12 codes which started with "." are ignored automatically, then letter "o"'s input finished.The code of "w" is "··-". Input "·" and the following options will be provided:
1. O
2. 8 ·
3. e -
4. a |
5. v ··
6. Space -·
7. j |·
8. w ·-
9. 3 --
10.g |-
11.y ·|
12.4 -|
13.q ||

Input "·" again within one second, and the following options will appear:
1.8
2. v ·
3. w -
4. y |

Input "-" again within one second. Wait for one second and w will be successfully input.

Next steps will not be demonstrated in detail. All the codes to be input are "-(H), ·(o), · · -(w), · - ·(Space), · |(a), |· -(r), · -(e), · - (Space), ·· |(y), ·(o),| - |(u), -- |(?),| ||| (Line Feed),| (I), · - · (Space), · |(a), - · - (m), · - · (Space), - |(f), -· (i), ||| (n), ·- (e), - - · (.)".

In the mode of "○", "-" and "|", follow similar steps only with "·" replaced by "○".

It should be note that the contents of the present disclosure are not limited to the above. Various changes, substitutions and upgrades without departing from the subject spirit are within the protection scope thereof, e.g., expansion from three symbols "·","-", "|" to four symbols ".","○'""-", "|".

## Claims

1. A T-code input method **characterized by** three symbols, namely, "·","-", and "|", which can be combined in no more than three to form no more than 39 different codes, used to represent 26 English letters, 10 Arabic numerals, question mark, period and space in three categories started with "·", "-" and "|" respectively. The T-code method can be used in PCs by arbitrarily assigning the symbols to three keys on the keyboard, or be used in micro input terminals that support the operation of the three symbols of "·", "-" and "|".

2. The T-code input method in Claim 1 is characterized as having two codes in addition to the 39 combinations to represent two keys, namely, "||||" representing "Enter", and "----" representing "Backspace".

3. The T-code input method in Claim 1 or Claim 2 is **characterized by** the correlation between the three categories of combinations started with "·", "-", and "|" respectively and the characters to be represented under the two different input modes as following:
(1) Mode I: the T codes corresponding to uppercase English letters, Arabic numerals, question mark, period, Space, Enter and Backspace: 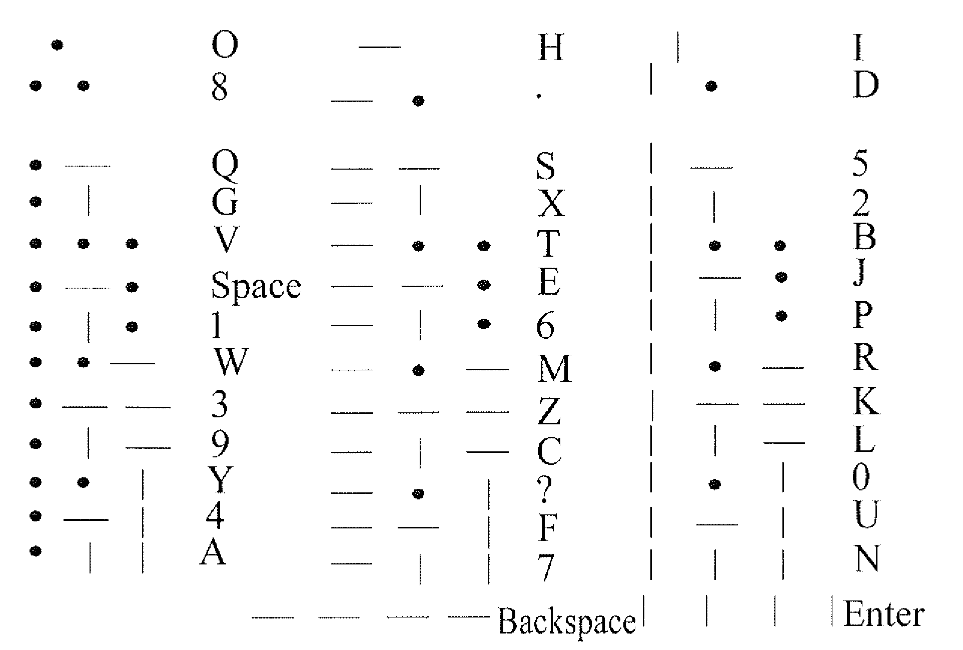
(2) Mode II: the T codes corresponding to lowercase English letters, Arabic numerals, question mark, period, Space, Enter and

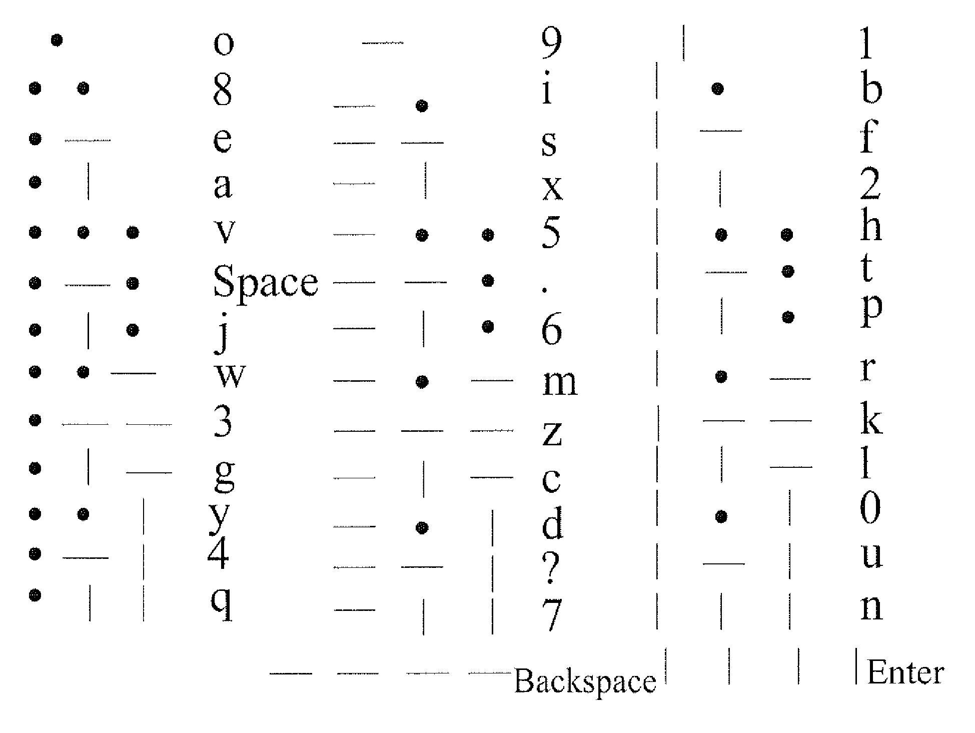

4. The T-code input method in Claim 3 is **characterized by** the two input modes as following:
Mode I, in which uppercase English letters, Arabic numerals, question mark, period, Space, Enter and Backspace can be entered; and
Mode II, in which lowercase English letters, Arabic numerals, question mark, period, Space, Enter and Backspace can be entered.
Under either mode, a code may start with ".", "-" or "|", thus representing one of the 13 characters.
Switching between the two input modes:
(1) For common keyboards: simultaneously press the three keys that are mapped to the three symbols;
(2) For micro input terminals: for key-type micro input terminals, simultaneously press two keys; and for ball-type micro input terminals, long press the ball for at least 1 second.
(3) Soft switching is also possible.

5. The T-code input method in Claim 4 is characterized as following: after inputting the first symbol, the system will provide a list of all the codes headed by the symbol and corresponding characters within 0.01 second; after inputting another symbol, method list will show with all related combinations and corresponding characters within 0.01 second; and a definite character will be given after inputting a third symbol.

6. A T-code input method **characterized by** three symbols, namely, "○", "-", and "|", which can be combined in no more than three to form no more than 39 different codes, used to represent 26 English letters, 10 Arabic numerals, question mark, period and space in three categories started with "○", "-" and "|" respectively. The T-code method can be used in PCs by arbitrarily assigning the symbols to three keys on the keyboard, or be used in micro input terminals that support the operation of the three symbols of "○", "-" and "|".

7. The T-code input method in Claim 6 is characterized as having two codes in addition to the 39 combinations to represent two keys, namely, "||||" representing "Enter", and "----" representing "Backspace".

8. The T-code input method in Claim 6 or Claim 7 is **characterized by** the correlation between the three categories of combinations started with "○", "-", and "|" respectively and the characters to be represented under the two different input modes as follows:
(1) Mode I: the T codes corresponding to uppercase English letters, Arabic numerals, question mark, period, Space, Enter and Backspace: 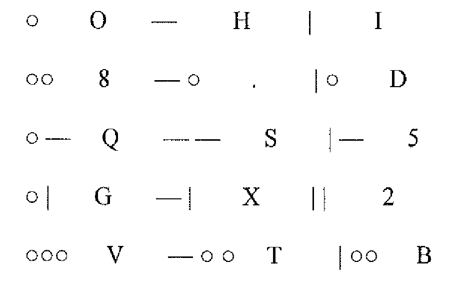 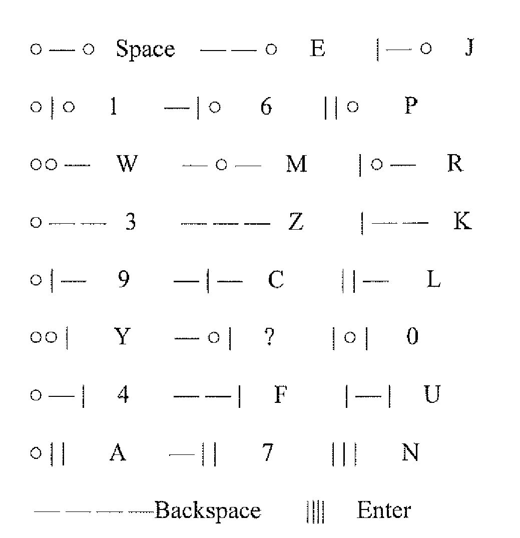
(2) Mode II: the T codes corresponding to lorwercase English letters, Arabic numerals, question mark, period, Space, Enter and Backspace:

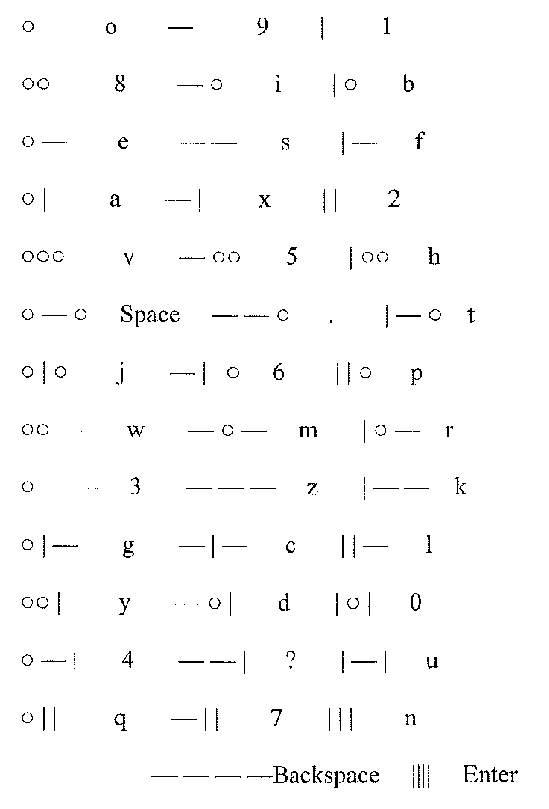

9. The T-code input method in Claim 8 is **characterized by** the two input modes as follows:
Mode I, in which uppercase English letters, Arabic numerals, question mark, period, Space, Enter and Backspace can be entered; and
Mode II, in which lowercase English letters, Arabic numerals, question mark, period, Space, Enter and Backspace can be entered.
Under either mode, a code may start with "○", "-" or "|", thus representing one of the 13 characters.
Switching between the two input modes:
(1) For common keyboards: simultaneously press the three keys that are mapped to the three symbols;
(2) For micro input terminals: for key-type micro input terminals, simultaneously press two keys; and for ball-type micro input terminals, long press the ball for at least 1 s.
(3) Soft switching is also possible.

10. The T-code input method in Claim 9 is characterized as follows: after inputting the first symbol, the system will provide a list of all the codes headed by the symbol and corresponding characters within 0.01 s; after inputting another symbol, method list will show with all related combinations and corresponding characters within 0.01 s; and a definite character will be given after inputting a third symbol.
